# EUROPÄISCHE PATENTSCHRIFT

(11) **EP 0 774 736 B1**
(45) Veröffentlichungstag und Bekanntmachung des Hinweises auf die Patenterteilung: **04.06.2003**
(21) Anmeldenummer: 96117043.8
(22) Anmeldetag: 24.10.1996
(51) Int. Cl.: G07C 7/00

(54) **Elektronischer Fahrtschreiber**
Electronic tachograph
Tachygraphe électronique

(30) Priorität: 14.11.1995 DE 2951800 U
(43) Veröffentlichungstag der Anmeldung: 21.05.1997
(73) Patentinhaber: SIEMENS AKTIENGESELLSCHAFT, 80333 München (DE)
(72) Erfinder: Hug, Klaus, Dipl.-Ing. (FH), 78727 Oberndorf (DE)

(56) Entgegenhaltungen:
- EP-A- 0 505 831
- DE-C- 3 636 353
- DE-U- 9 306 016
- FR-A- 2 559 289
- FR-A- 2 688 924
- GB-A- 1 507 580

## Beschreibung

Die Erfindung betrifft einen elektronischen Fahrtschreiber mit einem Einbaugehäuse und einer Frontwand, an welcher eine Anzeigeeinrichtung und dieser zugeordnete Tasten angeordnet sind, mit Vorkehrungen für die Eingabe/Entnahme wenigstens eines kartenförmigen Datenträgers sowie mit einer Pufferbatterie, welche frontseitig nach dem Entfernen einer plombierbaren Abdeckung zugänglich ist.

Im Gegensatz zu einem Fahrtschreiber, bei dem als Datenspeicher für die Betriebsdaten des Fahrzeuges und die Arbeitszeitdaten der Fahrer ausschließlich Diagrammscheiben Anwendung finden, die täglich oder bei sogenannten 7-Tage-Bündeln wöchentlich gewechselt werden und dann außerhalb des Gerätes archiviert werden müssen, stellt bei einem elektronischen Fahrtschreiber der mit einem entsprechenden Speichervolumen ausgestattete elektronische Datenspeicher einen festen Bestandteil des Gerätes dar. Der Speicherinhalt dieses Datenspeichers kann zwar, abgesehen von dem die Gesamtlaufleistung des betreffenden Fahrzeuges repräsentierenden Kilometer-Zählwert und diversen wartungsrelevanten Meßwerten entsprechend der Mindestaufbewahrungsdauer der Daten von einem Monat fortlaufend überschrieben werden, er muß andererseits aber stets lückenlos abfragbar sein. Das heißt, Spannungsunterbrechungen beim Wechseln der Fahrzeugbatterie, Stromversorgungslücken beispielsweise beim Kaltstart von Dieselfahrzeugen, korrosions- oder erschütterungsbedingte Kontaktunterbrechungen dürfen keinen Datenverlust zur Folge haben, so daß ein derartiger Fahrtschreiber eine Pufferbatterie erfordert, deren Ladung zweckmäßigerweise für eine Dauer ausgelegt ist, welche einem nach § 57b StVZO für Fahrtschreiber vorgeschriebenen 2-jährigen Prüfintervall entspricht.

Außer der Aufrechterhaltung der im geräteinternen Datenspeicher gespeicherten Fahrer- und Fahrzeugdaten hat die Pufferbatterie bei Spannungsunterbrechungen für den Fall, daß der Fahrer das Fahrzeug verlassen will, die Aufgabe, die Energie für die Steuerung der Verriegelung zur Freigabe der Fahrerdatenkarten und der Übertragung wenigstens der Arbeitszeitdaten in den Speicher einer Fahrerdatenkarte vor deren Entnahme aus dem Fahrtschreiber zu liefern. Eine Pufferung ist ferner erforderlich, für die fortlaufende Errechnung von Echtzeit und Datum sowie die Ermittlung und Abspeicherung von pausenrelevanten Zeitdaten beim Wechseln der Fahrzeugbatterie oder während Reparaturarbeiten am Fahrzeug, die ein Abhängen der Fahrzeugbatterie erforderlich machen.

Auf der anderen Seite sind elektronische Fahrtschreiber in der Regel als Einbaugeräte konzipiert, das heißt, sie sind beispielsweise in einer Armaturentafel eines Fahrzeuges derart eingelassen, daß der erforderliche visuelle und manuelle Zugang zum Gerät ausschließlich über an der Frontwand vorgesehene Diagnoseund Parametrierkontakte, Tasten für das Anwählen von Gerätefunktionen, Eingabe/Entnahme-Öffnungen für Datenkarten und Anzeigemittel erfolgt. Es liegt daher nahe, auch die Pufferbatterie für die aufgrund der geschilderten Funktionen zweckmäßigerweise eine Litium-Batterie mit einem Volumen in der Größenordnung von 4 ccm verwendet werden sollte, so anzuordnen, daß sie an der Frontwand des Fahrtschreibers zugänglich ist, so daß ein Ausbau des Fahrtschreibers nicht vorgenommen werden muß, wenn die Batterie ausgetauscht werden soll. Dieser Vorteil beim Wechseln der Pufferbatterie macht, was das Ziel der vorliegenden Erfindung darstellt, eine zuverlässige Zugriffssicherung erforderlich. Dabei sollten eine geeignete mit der Frontwand des Fahrtschreibers verbindbare Abdeckung des Batteriefaches und eine der Abdeckung zugeordnete Plombierung gefunden werden, die mit möglichst geringem Aufwand hergestellt und montiert werden können und außerdem auch den ästhetischen Belangen an der Frontseite des Gerätes entsprechen.

Die Lösung dieser Aufgabe beschreibt der Schutzanspruch 1. Weitere vorteilhafte Ausgestaltungen der Erfindung gehen aus den Unteransprüchen hervor.

Die Erfindung bietet den Vorteil, daß die an der Frontwand des Fahrtschreibers mittels einer Renkverbindung befestigbare Abdeckung des Batteriefaches im einfachsten Falle durch lediglich ein zusätzliches Bauelement, das formschlüssig mit der Frontwand und der Abdeckung verbindbar ist, gegen Verdrehen gesichert werden kann, wobei die Abdeckung und das zusätzliche Bauelement frontflächenbündig anbringbar sind und das zusätzliche Bauelement gleichzeitig auch eine Plombierfunktion ausübt. Mit anderen Worten, die für das Plombierelement vorgesehene Fassung ist in einfacher Weise spritzgießtechnisch sowohl in der Frontwand als auch in der Abdeckung ausgebildet. Wesentlich ist in diesem Zusammenhang auch die Tatsache, daß die Abdeckung als Kontaktträger dient und beim Einrenken in die Frontwand gegen die Wirkung einer auf der Gegenseite der Pufferbatterie angeordneten Kontaktfeder die Kontaktierung der Pufferbatterie bewirkt.

In Erweiterung dieses Prinzipgedankens wird vorgeschlagen, einen ebenfalls mit der Abdeckung und der Frontwand formschlüssig in Eingriff bringbaren Plombenträger vorzusehen, der mittels einer Schraube an der Frontwand zu befestigen ist. In diesem Falle ist es nicht zwingend erforderlich, daß die den Formschluß zwischen der Abdeckung und dem Plombenträger bewirkende Kontur kreisbogenförmig ausgebildet ist. Ein der Schraube zugeordnetes Plombierelement sichert dann mittelbar auch die Abdeckung der Pufferbatterie. Die dem Plombenträger zugeordnete Schraube kann zusätzlich die Funktion haben, die als Funktionsbaugruppe ausgerüstete und an einem Gehäuserahmen des betreffenden Fahrtschreibers durch Verrasten oder mittels Renkverbindungsmittel angeheftete Frontwand zu befestigen. Die Verwendung des Plombenträgers macht es andererseits aber auch möglich, daß zusätzlich zur Verriegelung und Plombierung der Abdeckung der Pufferbatterie auch der Zugang zu Diagnose- und Parametrierkontakten oder einer Justierschraube plombierbar abgedeckt werden kann. Dabei bleibt beim Entfernen des Plombenträgers zum Zwecke einer Diagnose oder einer Parametrierung beispielsweise nach einem Reifenwechsel die Funktion der Pufferbatterie in vollem Umfang erhalten.

Im folgenden wird die Erfindung anhand der Zeichnungen näher erläutert. Es zeigen:
Figur 1 eine Frontansicht eines elektronischen Fahrtschreibers mit der erfindungsgemäßen Anordnung und Plombierung der Pufferbatterie,
Figur 2 eine teilweise Frontansicht des Fahrtschreibers gemäß Figur 1 mit einem in Seitenansicht und Draufsicht dargestellten Plombierelement, welches der Abdeckung des Batteriefaches unmittelbar zugeordnet ist,
Figur 3 eine vergrößerte perspektivische Darstellung einer Abdeckung,
Figur 4 einen Schnitt der Frontwand des Fahrtschreibers gemäß der Schnittlinie A in Figur 1.

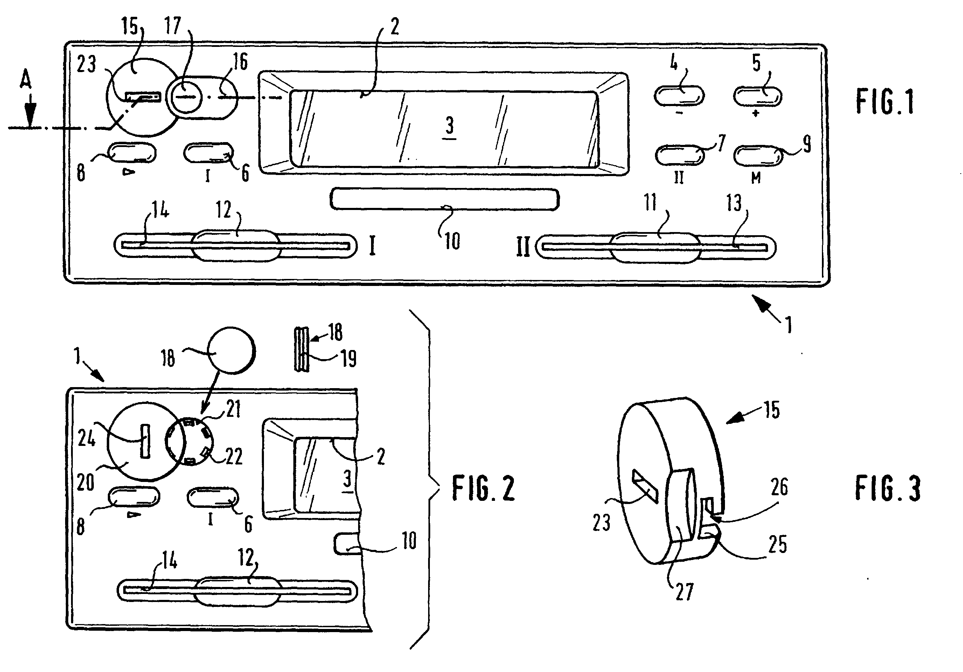

Wie die Figur 1 zeigt, weist der betrachtete elektronische Fahrtschreiber ein quaderförmiges Einbaugehäuse auf, dessen Frontseite von einer Blende beziehungsweise von einer zu einer Funktionsbaugruppe ausgerüsteten und mit dem Einbaugehäuse in geeigneter Weise verbindbaren Frontwand 1 gebildet wird. In der Frontwand 1 sind ein Fensterausschnitt 2 für ein der Frontwand 1 zugeordnetes Display 3 ausgebildet, Tasten 4, 5, 6, 7, 8 und 9 gelagert, ein Schlitz 10 für das Eingeben einer Speicherkarte, die den Transport sämtlicher Daten des Fahrtschreibers ermöglicht, ausgebildet und mit Griffmulden 11, 12 versehene Aufnahmeschächte 13, 14 für die den Fahrern zugeordneten Datenkarten ausgeformt. Das Display 3 dient der Anzeige wenigstens der wichtigsten Arbeitszeitdaten wie, der Dauer und des Zeitpunktes der während der Durchführung eines Transportauftrages zuletzt eingelegten Pause, der Tageslenkzeit, der Lenkzeit seit der letzten Lenkzeitunterbrechung, der Doppelwochenlenkzeit und der letzten beispielsweise 8 Stunden überschreitenden Ruhezeit. Zum Anwählen dieser Werte sind die den Fahrern I und II zugeordneten Tasten 6 und 7 sowie die Menütaste 9 vorgesehen. Die Tasten 4 und 5 dienen dem "Vor- und Rückwärtsblättern" in den für die angewählte Datenart ermittelten Datensätzen. Mit der Taste 8 wird im Zusammenwirken mit einer der Tasten 6 oder 7 die jeweilige Fahrerdatenkarte zur Entnahme freigegeben. Mit 15 ist eine Abdeckung bezeichnet, mit der das Batteriefach verschlossen ist. Mit der Abdeckung 15 steht ein Plombenträger 16 in formschlüssiger Verbindung. 17 bezeichnet ein in den Plombenträger 16 eingesetztes Plombierelement.

Wie aus Figur 2 hervorgeht ist das dort dargestellte und im Hinblick auf die Verriegelungsfunktion zweckmäßigerweise im Durchmesser größere Plombierelement 18 als topfförmiges Käppchen mit einer umlaufenden Nut 19 ausgebildet. Eine sowohl in der Abdeckung 20 als auch in der Frontwand 1 ausgebildete Aussparung bilden eine zylindrische Senkung 21, die dem Plombierelement 18 als Fassung dient. Dabei sind an der Senkungswand, und zwar an dem Senkungswandabschnitt der Abdeckung 20 und an dem in der Frontwand 1 befindlichen Senkungswandabschnitt in die Senkung 21 hineinragende Rastnasen ausgebildet, die mit der Nut 19 des Plombierelementes 18 zusammenwirken und von denen eine mit 22 bezeichnet ist. Mit 23 und 24 sind in den jeweiligen Abdeckungen 15 und 20 eingeformte Schlitze bezeichnet, die dem Ansetzen eines Werkzeuges zum Anbringen und Lösen der Abdeckungen 15, 20 dienen.

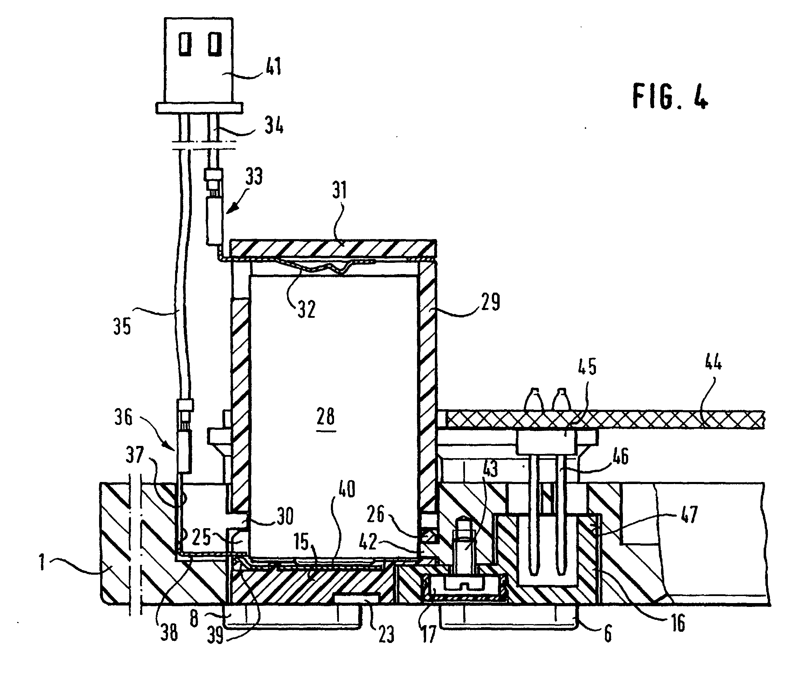

Die Figur 3 und die Figur 4 zeigen, daß die Abdeckung 15, was auch für die Abdeckung 20 gilt, topfförmig geformt ist, und daß an dem umlaufenden Rand 25 sich gegenüberliegende Renkverbindungskonturen, von denen eine Kontur mit 26 bezeichnet ist, ausgeformt sind. Ferner zeigt die Figur 3, daß die für den formschlüssigen Eingriff des Plombenträgers 16 in die Abdeckung 15 vorgesehene Aussparung 27 glattflächig ausgebildet ist. Außerdem sei an dieser Stelle erwähnt, daß die außenliegenden Flächen der Abdeckung 15 und des Plombenträgers 16 im montierten Zustand bündig sind mit der Frontfläche der Frontwand 1. Das heißt, daß die außenliegenden Flächen der Abdeckung 15 und des Plombenträgers 16 entsprechend einer Wölbung oder sonstigen Konturierung der Frontwand 1 ausgestaltet sind.

Mit dem mit der Figur 4 dargestellten Schnitt sei anhand des einen Ausführungsbeispiels der konstruktive Aufbau an der Frontwand 1 im Bereich der Pufferbatterie 28 näher erläutert. Der Schnitt zeigt, daß die Pufferbatterie 28 in einem als Batteriefach dienenden zylindrischen Gehäuse 29 aufgenommen ist, welches auf einem an der Frontwand 1 ausgebildeten, teilweise unterbrochenen Ring 30 aufsitzt und an der Frontwand 1 mittels eines angeformten Flansches quadratischen Querschnitts durch eine geeignete Verbindungstechnik, beispielsweise durch Ultraschall-Schweißen, befestigt ist. In der Figur 4 ist der erwähnte Flansch, da die Seitenlänge gleich ist dem Durchmesser des Gehäuses 29, nicht sichtbar. Parallel zum Boden 31 des Gehäuses 29 ist in in einem in geeigneter Weise ausgebildeten Schlitz eine Kontaktfeder 32 gehaltert. Letztere ist derart ausgebildet, daß sie beim Lösen der Abdeckung 15 die Pufferbatterie 28 so weit verschiebt, daß sie problemlos gegriffen werden kann. An der Kontaktfeder 32 sind Crimp-Verbindungsmittel 33 angeformt, mittels denen eine Leitung 34 mit der Kontaktfeder 32 verbunden ist. Eine weitere Leitung 35 ist ebenfalls über Crimp-Verbindungsmittel 36 mit einer in der Frontwand 1 befestigten Kontaktfahne 37 verbunden, deren freies, federndes Ende 38 in Kontakt steht mit einem Arm 39 einer in der Abdeckung 15 befestigten, dem Pluspol der Pufferbatterie 28 zugeordneten Kontaktplatte 40. Die beiden von der Pufferbatterie 28 ausgehenden Leitungen 34 und 35 sind von einem Stecker 41 abgeschlossen, dessen Steckersockel einer nicht dargestellten, rechtwinklig zur Frontwand 1 angeordneten Leiterplatte zugeordnet ist. Mit 42 ist ein mit der an der Abdeckung 15 ausgebildeten Renkverbindungskontur 26 in Eingriff stehender und an der Frontwand 1 ausgebildeter Zapfen bezeichnet. 43 bezeichnet eine Schraube zur Befestigung des Plombenträger s 16 an der Frontwand 1. Auf einer mit 44 bezeichneten dem Display 3 zugeordneten Leiterplatte ist, wie ferner aus der Figur 4 hervorgeht, ein Kontaktsockel 45 befestigt, dessen Kontakte - einer ist mit 46 bezeichnet - durch die Frontwand 1 hindurch in eine in der Frontwand 1 ausgebildete Steckerfassung 47 hineinragen, die der Aufnahme eines Diagnose- und Parametriersteckers dient.

## Patentansprüche

1. Elektronischer Fahrtschreiber mit einem Einbaugehäuse und einer Frontwand, an welcher eine Anzeigeeinrichtung und dieser zugeordnete Tasten angeordnet sind, mit Vorkehrungen für die Eingabe/Entnahme wenigstens eines kartenförmigen Datenträgers sowie mit einer Pufferbatterie, welche frontseitig nach dem Entfernen einer plombierbaren Abdeckung zugänglich ist,
**dadurch gekennzeichnet,**
**daß** in der Abdeckung (15, 20) und in der Frontwand (1) Aussparungen (27) derart ausgebildet sind, daß sich in der Endstellung des mittels einer Renkverbindung an der Frontwand (1) befestigbaren Abdeckung (15, 20) eine Fassung für ein frontseitig anbringbares, in die Abdeckung (15, 20) und in die Frontwand (1) eingreifendes Plombierelement (16/17,18) ergibt.

2. Elektronischer Fahrtschreiber nach Anspruch 1,
**dadurch gekennzeichnet,**
**daß** die Aussparung in der Frontwand (1) und die Aussparung (27) in der Abdeckung (15, 20) Abschnitte einer zylindrischen Senkung (21) darstellen und als Plombierelement (17, 18) ein topfförmiges Käppchen dient.

3. Elektronischer Fahrtschreiber nach Anspruch 2,
**dadurch gekennzeichnet,**
**daß** an den Wänden der Senkung (21) in die Senkung (21) hineinragende Rastnasen (22) angeformt sind und
**daß** an der Mantelfläche des Plombierelementes (18) eine den Rastnasen (22) zugeordnete umlaufende Nut (19) ausgebildet ist.

4. Elektronischer Fahrtschreiber nach Anspruch 1,
**dadurch gekennzeichnet,**
**daß** die Fassung derart ausgebildet ist, daß ein mittels einer Schraube (43) an der Frontwand (1) befestigbarer Plombenträger (16) verwendbar ist und die Schraube (43) mittels eines mit dem Plombenträger (16) verbindbaren Plombierelementes (17) gesichert ist.

## Claims

1. Electronic tachograph having an installation housing and a front panel on which a display device and pushbutton keys assigned to the latter are arranged, having measures for introducing/removing at least one card-chip data carrier and having a buffer battery which is accessible at the front after a lead-sealable cover has been removed, **characterized in that** recesses (27) are formed in the cover (15, 20) and in the front panel (1) in such a way that the holder for a lead-sealing element (16/17, 18) which can be attached to the front and engages in the cover (15, 20) and in the front panel (1) is formed in the end position of the cover (15, 20) which can be attached to the front panel (1) by means of a bayonet-type connection.

2. Electronic tachograph according to Claim 1, **characterized in that** the recess in the front panel (1) and the recess (27) in the cover (15, 20) constitutes sections of a cylindrical depression (21) and a pot-shaped cap serves the lead-sealing element (17, 18).

3. Electronic tachograph according to Claim 2, **characterized in that** latching projections (22) which project into the depression (21) are formed on the walls of the depression (21) and,
**in that** a peripheral groove (19) which is assigned to the latching projections (22) is formed on the outer surface of the lead-sealing element (18).

4. Electronic tachograph according to Claim 1, **characterized in that** the holder is constructed in such a way that a lead carrier (16) which can be attached to the front panel (1) by means of a screw (43) can be used, and the screw (43) is secured by means of a lead-sealing element (17) which can be connected to the lead carrier (16).

## Revendications

1. Enregistreur de trajets électronique comprenant un boîtier à encastrer et une paroi avant sur laquelle sont disposés un dispositif d'affichage et des touches associées à ce dernier, avec des moyens pour l'insertion/extraction d'au moins un support de données en forme de carte, ainsi qu'une pile tampon qui est accessible par l'avant après l'enlèvement d'un obturateur pouvant être condamné par plomb,
**caractérisé en ce que** des évidements (27) sont formés dans l'obturateur (15, 20) et dans la paroi avant (1) de telle manière que, dans la position finale de l'obturateur (15,20) qui peut être fixé à la paroi avant (1) au moyen d'une liaison à baïonnette, il se forme un alvéole pour un élément de plombage (16/17, 18) pouvant être mis en place par l'avant et qui s'engage dans l'obturateur (15, 20) et dans la paroi avant (1 ).

2. Enregistreur de trajets électronique selon la revendication 1,
**caractérisé en ce que** l'évidement de la paroi avant (1) et l'évidement (27) de l'obturateur (15, 20) représentent des segments d'une dépression cylindrique (21), et un capuchon en forme de godet sert d'élément de plombage (17, 18).

3. Enregistreur de trajets électronique selon la revendication 2,
**caractérisé en ce que**, sur les parois de la dépression (21) sont formées des dents d'enclenchement (22) qui font saillie dans la dépression (21 ) et
**en ce que**, sur la paroi latérale de l'élément de plombage (18), est formée une gorge périphérique (19) associée aux dents d'enclenchement (22).

4. Enregistreur de trajets électronique selon la revendication 1,
**caractérisé en ce que** l'alvéole est présente une forme telle qu'on puisse utiliser un porte-plomb (16) pouvant être fixé à la paroi avant (1) au moyen d'une vis (43) et la vis (43) est condamnée au moyen d'un élément de plombage (17) qui peut être relié au porte-plomb (16).
